# EUROPÄISCHE PATENTSCHRIFT

(11) **EP 2 029 393 B1**
(45) Veröffentlichungstag und Bekanntmachung des Hinweises auf die Patenterteilung: **30.09.2009**
(21) Anmeldenummer: 07729505.3
(22) Anmeldetag: 25.05.2007
(51) Int. Cl.: B60R 11/00

(54) **VERSCHLUSSBLENDENVORRICHTUNG**
CLOSING SCREEN DEVICE
DISPOSITIF OBTURATEUR

(30) Priorität: 31.05.2006 DE 102006025382
(43) Veröffentlichungstag der Anmeldung: 04.03.2009
(73) Patentinhaber: Continental Automotive GmbH, 30165 Hannover (DE)
(72) Erfinder: GRANDEL, Johannes, 61169 Friedberg (DE); NEHM, Georg, 63843 Niedernberg (DE); RIGORTH, Marcel, 64832 Babenhausen (DE); URLAUB, Günter, 64850 Schaafheim (DE)
(86) Internationale Anmeldenummer: PCT/EP2007/055076
(87) Internationale Veröffentlichungsnummer: WO 2007/137998

(56) Entgegenhaltungen:
- DE-A1- 10 008 887
- DE-A1- 10 120 314
- US-B1- 6 669 258

## Beschreibung

Die Erfindung bezieht sich auf eine Verschlussblendenvorrichtung zur verschließenden Abdeckung einer Öffnung in einem Bauteil eines Kraftfahrzeugs, mit einem Antriebsmechanismus, durch den eine Verschlussblende aus einer die Öffnung freigebenden Öffnungsposition in eine die Öffnung verschließende Verschlussposition bewegbar antreibbar ist, in der die Verschlussblende sich in einer zum sie umgebenden Randbereich des Bauteils des Kraftfahrzeugs bündigen Lage befindet.

Derartige Verschlussblendenvorrichtungen, wie sie etwa aus der US 6 669 258 B1 bekannt sind, dienen dazu, eine Öffnung in einem Bauteil eines Kraftfahrzeugs, insbesondere in einer Armaturentafel freizugeben, wenn z. B. eine Anzeige wie ein Monitor bei Bedarf aus einer Ausnehmung heraus in eine Aktivposition gebracht werden soll. Besteht kein momentaner Bedarf an den durch die Anzeige darstellbaren Informationen, kann die Anzeige in die Ausnehmung hineingefahren und die Öffnung der Ausnehmung durch die Verschlussblende verschlossen werden. Dabei sollte in der Verschlussposition der Verschlussblende nur ein möglichst geringer und gleichmäßiger Spalt zwischen den umlaufenden Rändern von Öffnung und Verschlussblende sichtbar sein.

Aufgabe der Erfindung ist es daher, eine Verschlussblendenvorrichtung der eingangs genannten Art zu schaffen, die bei einfachem Aufbau ein Verschließen der Öffnung mit geringem Spalt zwischen den umlaufenden Rändern von Öffnung und Verschlussblende ermöglicht.

Diese Aufgabe wird erfindungsgemäß dadurch gelöst, dass ein sich in Bewegungsrichtung der Verschlussblende erstreckender Deckelträger von einem reversierbaren Antrieb zwischen der Öffnungsposition und der Verschlussposition in Richtung seiner Längserstreckung bewegbar antreibbar ist, wobei der in Schließbewegungsrichtung vordere Endbereich der Verschlussblende um eine sich quer zur Bewegungsrichtung erstreckende Schwenkachse schwenkbar am Deckelträger angelenkt ist, die um eine Lose entlang der Erstreckung des Deckelträgers frei bewegbar ist, und wobei der in Schließbewegungsrichtung hintere Endbereich der Verschlussblende über einen Kipphebel mit dem Deckelträger verbunden ist, der mit seinem einen Ende an der Verschlussblende und mit seinem anderen Ende an dem Deckelträger um zur Schwenkachse parallele Achsen schwenkbar angelenkt und zum Deckelträger hin federbelastet ist, mit einem Anschlag, durch den die Bewegbarkeit der Verschlussblende in Schließbewegungsrichtung vor Erreichen der Verschlusslage des Deckelträgers begrenzt ist.

Durch diese Ausbildung wird auf einfache Weise zum Verschließen der Öffnung die Verschlussblende von unten in die Öffnung hineinbewegt, so dass die an ihrem umlaufenden Rand freie Verschlussblende mit geringem Spiel zum umlaufenden Rand der Öffnung diese verschließt.

Damit wird auch ein Eindringen von Schmutz durch den Spalt in die Ausnehmung unter der Verschlussblende weitgehend verhindert.

Die geringe Breite des Spalts führt auch zu einer optisch einheitlichen Oberfläche von Verschlussblende und des sie umgebenden Bereichs des Bauteils des Kraftfahrzeugs wie z. B. einer Armaturentafel.

Befindet sich die Verschlussblende in ihrer Öffnungsposition ganz oder teilweise unter dem sie umgebenden Randbereich des Bauteils des Kraftfahrzeugs, so ist sie in ihrer Öffnungsposition nicht störend sichtbar.

Der Deckelträger kann je nach dem vorhandenen Bauraum entlang einer geradlinigen Bewegungsbahn oder aber auch entlang einer bogenförmigen Bewegungsbahn bewegbar sein.

Zur Positionierung kann in einfacher Weise der Deckelträger in einer fahrzeugfesten Führung bewegbar geführt sein.

Diese Führung kann in einem Randbereich der Ausnehmung ausgebildet sein, deren Öffnung durch die Verschlussblende verschließbar ist.

Eine einfache Ausbildung besteht dabei darin, dass der Deckelträger in einer Führungsnut bewegbar geführt ist.

Ein Bewegungsantrieb des Deckelträgers kann dadurch erfolgen, dass der Deckelträger eine Zahnstange ist, in die ein Antriebsritzel des Antriebs eingreift, wobei vorzugsweise das Antriebsritzel elektromotorisch drehbar antreibbar ist.

Eine einfache Ausbildung der Lose besteht darin, dass die Lose von einem sich in Erstreckungsrichtung des Deckelträgers erstreckenden Langloch gebildet ist, in das ein koaxial zur Schwenkachse sich erstreckender, an dem in Schließbewegungsrichtung vorderen Ende der Verschlussblende angeordneter Gelenkzapfen hineinragt.

Ist dabei der Gelenkzapfen über einen Exzenter an der Verschlussblende angeordnet und um die Exzenterachse drehbar einstellbar, so kann auf einfache Weise in der Verschlussposition der Verschlussblende deren Höhe so eingestellt sein, dass eine weitgehend exakte Bündigkeit zu dem die Verschlussblende umgebenden Randbereich des Bauteils des Kraftfahrzeugs erreicht wird.

Nur geringer Einbauraum ist erforderlich, wenn der Kipphebel mittels einer vorgespannten Torsionsfeder zum Deckelträger hin federbelastet ist.

Eine stabile, lagegenaue Führung der Verschlussblende wird dadurch erreicht, dass zwei gleiche Deckelträger parallel in einem Abstand zueinander angeordnet sind, wobei die Stabilität noch vergrößert wird, wenn die beiden Deckelträger durch eine oder mehrere Traversen fest miteinander verbunden sind.

Um den Deckelträger dabei verwindungsfrei anzutreiben, kann sich eine von dem Antrieb drehbar antreibbare Antriebsachse quer zur Bewegungsrichtung der Verschlussblende erstreckend angeordnet sein, die zwei jeweils in eine Zahnstange eingreifende Antriebsritzel trägt.

Ist der Anschlag in Bewegungsrichtung der Verschlussblende variabel einstellbar, so kann in Bewegungsrichtung eine exakte Einstellung der Verschlussblende in ihrer Verschlussposition erfolgen.

Von dem Antrieb kann bewegungsgekoppelt weiterhin ein Monitor aus einer von der Verschlussblende in der Verschlussposition abgedeckten Inaktivposition in eine in der Öffnungsposition der Verschlussblende aus der Öffnung herausragende Aktivposition bewegbar antreibbar sein, so dass sowohl der Bewegungsantrieb der Verschlussblende als auch der Bewegungsantrieb des Monitors aufeinander abgestimmt durch einen einzigen Antrieb möglich ist.

Ein Ausführungsbeispiel der Erfindung ist in der Zeichnung dargestellt und wird im Folgenden näher beschrieben. Es zeigen
- Figur 1: einen Querschnitt einer Bordmonitoreinrichtung mit einer Verschlussblendenvorrichtung in der Aktivposition,
- Figur 2: die Bordmonitoreinrichtung nach Figur 1 mit geöffneter Verschlussblende und eingefahrenem Monitor,
- Figur 3: die Bordmonitoreinrichtung nach Figur 1 mit der Verschlussblende in Öffnungsposition und teilausgefahrenem Monitor,
- Figur 4: die Bordmonitoreinrichtung nach Figur 1 in der Aktivposition mit der Verschlussblende in der Öffnungsposition,
- Figur 5: eine perspektivische Ansicht der Verschlussblendenvorrichtung nach Figur 1 in ihrer Öffnungsposition,
- Figur 6: eine perspektivische Ansicht der Verschlussblendenvorrichtung nach Figur 1 in einer ersten Phase des Schließvorgangs,
- Figur 7: eine perspektivische Ansicht der Verschlussblendenvorrichtung nach Figur 1 in einer zweiten Phase des Schließvorgangs,
- Figur 8: eine perspektivische Ansicht der Verschlussblendenvorrichtung nach Figur 1 in ihrer Verschlussposition,

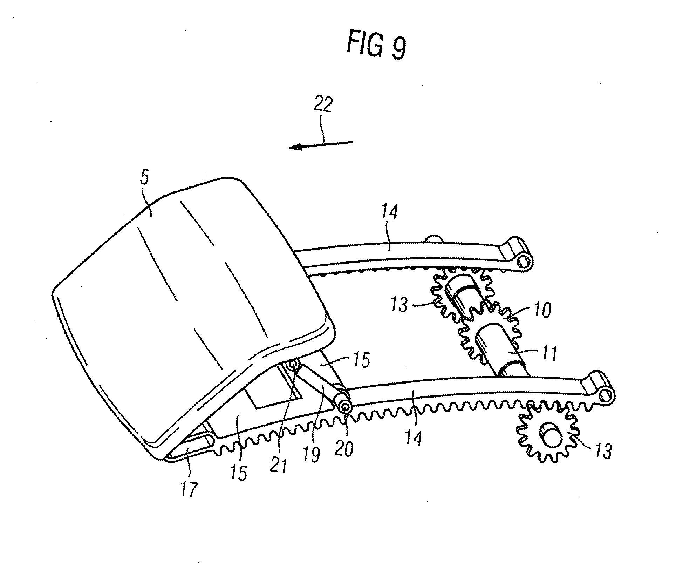

- Figur 9: eine weitere perspektivische Ansicht der Verschlussblendenvorrichtung nach Figur 1 in ihrer Verschlussposition.

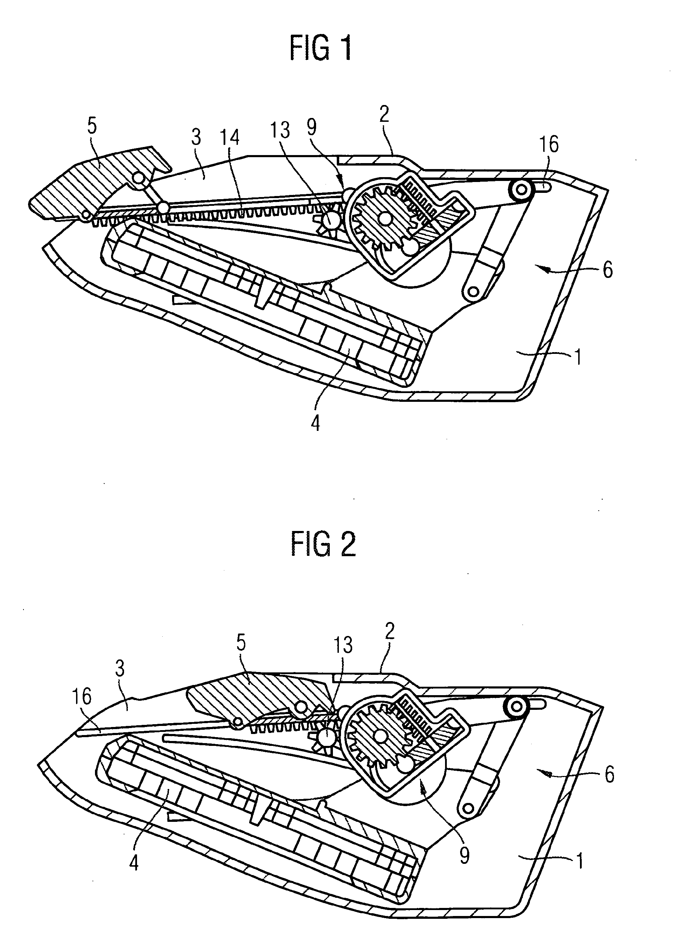

Die in den Figuren 1 bis 4 dargestellte Bordmonitoreinrichtung ist in einer Ausnehmung 1 einer Armaturentafel 2 angeordnet, wobei die Ausnehmung 1 eine Öffnung 3 besitzt, die in der in Figur 1 dargestellten Inaktivposition bei in die Ausnehmung 1 eingefahrenem Monitor 4 von einer Verschlussblende 5 abgedeckt ist.

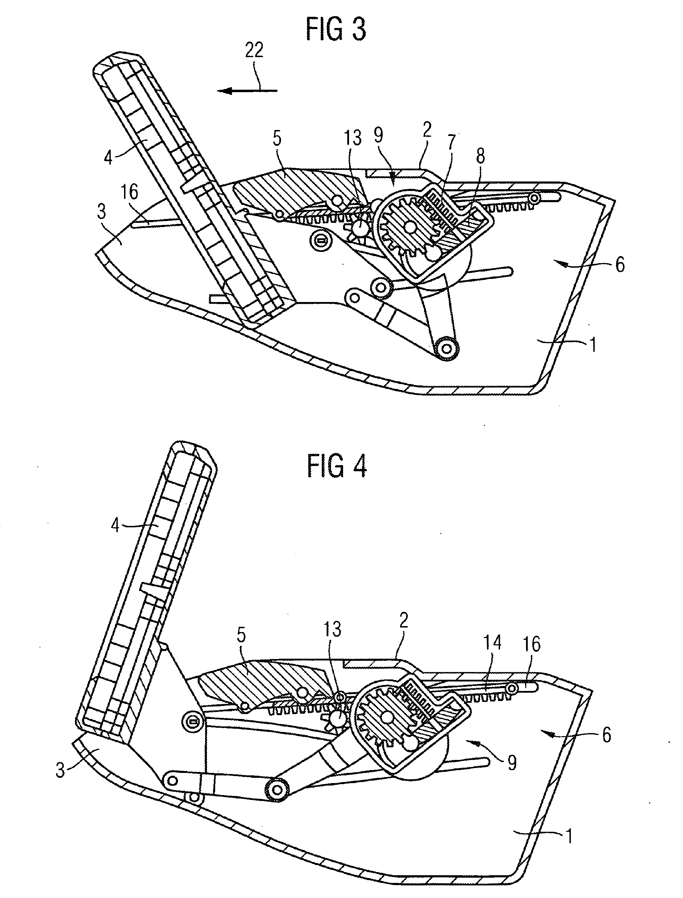

Von einem gemeinsamen Antrieb 6 ist die Verschlussblende 5 in eine die Öffnung 3 freigebende Position bewegbar antreibbar (Figur 2) und anschließend der Monitor 4 über eine Zwischenposition (Figur 3) in eine ausgefahrene Aktivposition bewegbar (Figur 4).

In dieser Aktivposition befindet sich der Monitor 4 in einer von einem Fahrer oder Beifahrer in einem Fahrzeug beobachtbaren Position.

In umgekehrter Reihenfolge sind Monitor 4 und Verschlussblende 5 wieder in ihre Inaktivposition bewegbar antreibbar.

Zum Bewegungsantrieb des Monitors 4 wird von der Ausgangswelle eines reversierbaren Elektromotors eine Spindelwelle 7 und von der Spindelwelle 7 ein Spindelrad 8 drehbar angetrieben, das drehfest auf einer um eine Achse drehbaren Antriebswelle einer Antriebsscheibe des Antriebsmechanismus 9 für Monitor 4 und Verschlussblende 5 angeordnet ist.

Der Antriebsmechanismus 9 weist eine drehbar antreibbare Blendenantriebsscheibe mit einem an ihrem peripher umlaufenden Randbereich konzentrischen Zahnsektor auf, der in ein Ritzel 10 eingreift, das mittig auf einer Antriebsachse 11 drehfest angeordnet ist.

Die Antriebsachse 11 erstreckt sich quer zur Bewegungsrichtung 12 der Verschlussblende 5 und trägt an ihren beiden Enden jeweils ein Antriebsritzel 13.

Die beiden Antriebsritzel 13 greifen jeweils in die Zähne einer bogenförmigen Zahnstange 14 ein, die parallel im Abstand zueinander angeordnet und mittels Traversen 15 fest miteinander verbunden sind.

Die beiden Zahnstangen 14 sind an ihrem zur Bewegungsrichtung 12 seitlichen Rand mittels nicht dargestellter Führungsnocken in Führungsnuten 16 in der Wand der Ausnehmung 1 linear bewegbar geführt, die sich in Bewegungsrichtung 12 der Verschlussblende 5 erstrecken.

An dem in Schließbewegungsrichtung 22 der Verschlussblende 5 vorderen Endbereich sind in den Zahnstangen 14 Langlöcher 17 ausgebildet, die sich in Erstreckungsrichtung der Zahnstangen 14 erstrecken und in die jeweils sich parallel zur Antriebsachse 11 erstreckende, an dem in Schließbewegungsrichtung 22 vorderen Ende der Verschlussblende 5 angeordnete Gelenkzapfen 18 eingreifen.

Dadurch ist die Verschlussblende 5 schwenkbar an den Zahnstangen 14 befestigt.

Der in Schließbewegungsrichtung 22 hintere Endbereich der Verschlussblende 5 ist jeweils über einen Kipphebel 19 mit den Zahnstangen 14 verbunden, die mit ihrem einen Ende an der Verschlussblende 5 und mit ihrem anderen Ende an den Zahnstangen 14 um zur Antriebsachse 11 parallele Achsen 20 und 21 schwenkbar angelenkt sind.

Durch nicht dargestellte Torsionsfedern sind die Kipphebel 19 zu den Zahnstangen 14 hin federbelastet.

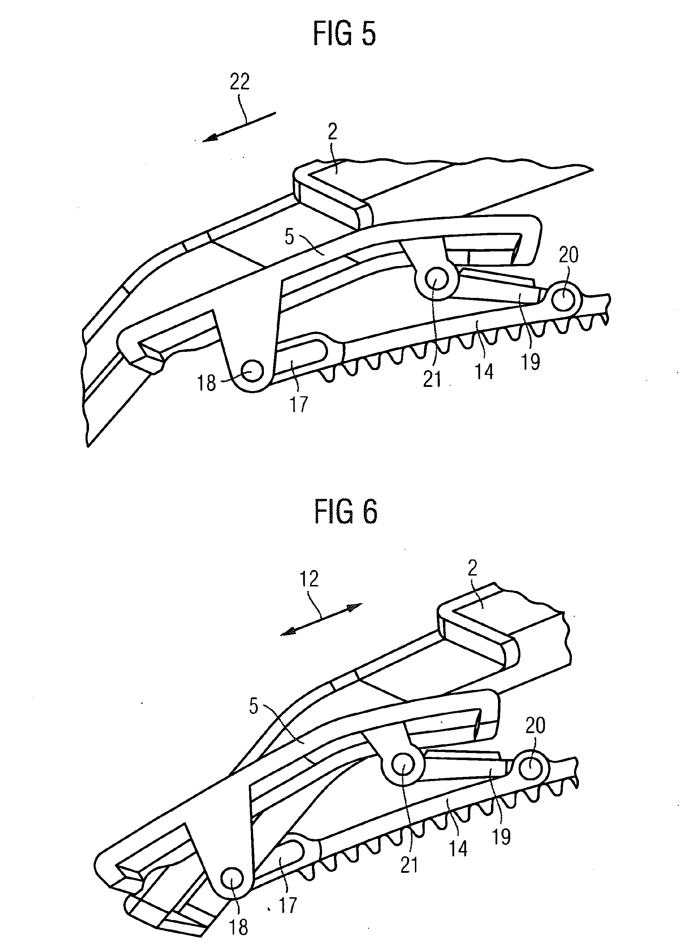

Befindet sich die Verschlussblende 5 in der in den Figuren 4 und 5 dargestellten Öffnungsposition und soll die Öffnung 3 geschlossen werden, werden die Zahnstangen 14 von den Antriebsritzeln 13 in Schließbewegungsrichtung 22 angetrieben.

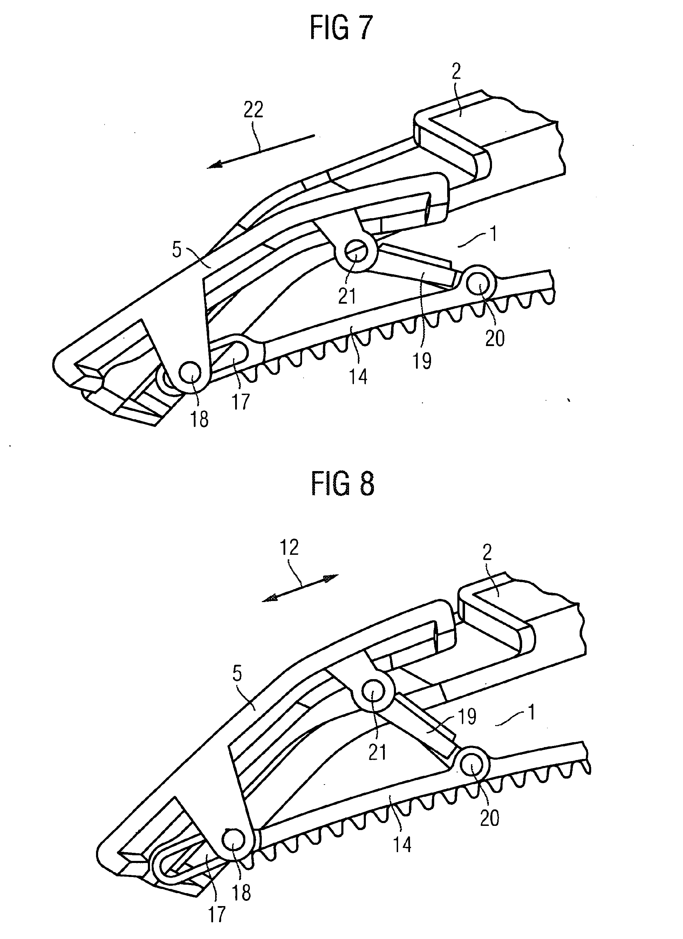

Dabei wird von den Zahnstangen 14 und der Verschlussblende 5 eine Bewegung entsprechend der Figuren 3 und 6 durchgeführt, bis entsprechend den Figuren 2 und 7 die Verschlussblende 5 an einem nicht dargestellten Anschlag zur Anlage gelangt, so dass sich die Verschlussblende 5 nicht weiter in Schließbewegungsrichtung 22 bewegen kann.

Unabhängig davon werden die Zahnstangen 14 aber weiter in Schließbewegungsrichtung 22 bewegt, bis sich die Gelenkzapfen 18 von dem dem freien Ende der Zahnstangen 14 näheren linken Ende der Langlöcher 17 zum gegenüberliegenden rechten Ende der Langlöcher 17 verschoben haben (Figuren 1 und 8).

Dabei werden gleichzeitig die Kipphebel 18 entgegen der Kraft der Torsionsfedern aus ihrer den Zahnstangen 14 nahen Schwenkstellung in einer den Zahnstangen 14 entfernten Schwenkstellung verschwenkt und damit auch das in Schließbewegungsrichtung 22 hintere Ende der Verschlussblende 5 in die Verschlussposition der Verschlussblende 5 angehoben.

Zum Öffnen erfolgt dieser Ablauf in umgekehrter Reihenfolge.

## Patentansprüche

1. Verschlussblendenvorrichtung zur verschließenden Abdeckung einer Öffnung (3) in einem Bauteil (2) eines Kraftfahrzeugs, mit einem Antriebsmechanismus (9), durch den eine Verschlussblende (5) aus einer die Öffnung freigebenden Öffnungsposition in eine die Öffnung verschließende Verschlussposition bewegbar antreibbar ist, in der die Verschlussblende sich in einer zum sie umgebenden Randbereich des Bauteils des Kraftfahrzeugs bündigen Lage befindet, **dadurch gekennzeichnet, dass** ein sich in Bewegungsrichtung (12) der Verschlussblende (5) erstreckender Deckelträger (14) von einem reversierbaren Antrieb (6) zwischen der Öffnungsposition und der Verschlussposition in Richtung seiner Längserstreckung bewegbar antreibbar ist, wobei der in Schließrichtung vordere Endbereich der Verschlussblende (5) um eine sich quer zur Bewegungsrichtung (12) erstreckende Schwenkachse (18) schwenkbar am Deckelträger (14) angelenkt ist, die um eine Lose (17) entlang der Erstreckung des Deckelträgers frei bewegbar ist, und wobei der in Schließbewegungsrichtung (22) hintere Endbereich der Verschlussblende (5) über einen Kipphebel (19) mit dem Deckelträger (14) verbunden ist, der mit seinem einen Ende an der Verschlussblende (5) und mit seinem anderen Ende an dem Deckelträger (14) um zur Schwenkachse (18) parallele Achsen (20,21) schwenkbar angelenkt und zum Deckelträger hin federbelastet ist, mit einem Anschlag, durch den die Bewegbarkeit der Verschlussblende (5) in Schließbewegungsrichtung (22) vor Erreichen der Verschlusslage des Deckelträgers begrenzt ist.

2. Verschlussblendenvorrichtung nach Anspruch 1, **dadurch gekennzeichnet, dass** sich die Verschlussblende (5) in ihrer Öffnungsposition ganz oder teilweise unter dem sie umgebenden Randbereich des Bauteils des Kraftfahrzeugs befindet.

3. Verschlussblendenvorrichtung nach einem der vorhergehenden Ansprüche, **dadurch gekennzeichnet, dass** der Deckelträger entlang einer geradlinigen Bewegungsbahn bewegbar ist.

4. Verschlussblendenvorrichtung nach einem der Ansprüche 1 und 2, **dadurch gekennzeichnet, dass** der Deckelträger entlang einer bogenförmigen Bewegungsbahn bewegbar ist.

5. Verschlussblendenvorrichtung nach einem der vorhergehenden Ansprüche, **dadurch gekennzeichnet, dass** der Deckelträger in einer fahrzeugfesten Führung bewegbar geführt ist.

6. Verschlussblendenvorrichtung nach Anspruch 5 **dadurch gekennzeichnet, dass** der Deckelträger in einer Führungsnut (16) bewegbar geführt ist.

7. Verschlussblendenvorrichtung nach einem der vorhergehenden Ansprüche, **dadurch gekennzeichnet, dass** der Deckelträger eine Zahnstange (14) ist, in die ein Antriebsritzel (13) des Antriebs (6) eingreift.

8. Verschlussblendenvorrichtung nach Anspruch 7, **dadurch gekennzeichnet, dass** das Antriebsritzel (13) elektromotorisch drehbar antreibbar ist.

9. Verschlussblendenvorrichtung nach einem der vorhergehenden Ansprüche, **dadurch gekennzeichnet, dass** die Lose von einem sich in Erstreckungsrichtung des Deckelträgers erstreckenden Langloch (17) gebildet ist, in das ein koaxial zur Schwenkachse sich erstreckender, an dem in Schließbewegungsrichtung (22) vorderen Ende der Verschlussblende (5) angeordneter Gelenkzapfen (18) hineinragt.

10. Verschlussblendenvorrichtung nach Anspruch 9, **dadurch gekennzeichnet, dass** der Gelenkzapfen über einen Exzenter an der Verschlussblende angeordnet und um die Exzenterachse drehbar einstellbar ist.

11. Verschlussblendenvorrichtung nach einem der vorhergehenden Ansprüche, **dadurch gekennzeichnet, dass** der Kipphebel (19) mittels einer vorgespannten Torsionsfeder zum Deckelträger hin federbelastet ist.

12. Verschlussblendenvorrichtung nach einem der vorhergehenden Ansprüche, **dadurch gekennzeich-net**, **dass** zwei gleiche Deckelträger parallel in einem Abstand zueinander angeordnet sind.

13. Verschlussblendenvorrichtung nach Anspruch 12, **dadurch gekennzeichnet, dass** die beiden Deckelträger durch eine oder mehrere Traversen (15) fest miteinander verbunden sind.

14. Verschlussblendenvorrichtung nach einem der Ansprüche 12 und 13, **dadurch gekennzeichnet, dass** sich eine von dem Antrieb (6) drehbar antreibbare Antriebsachse (11) quer zur Bewegungsrichtung (12) der Verschlussblende (5) erstreckend angeordnet ist, die zwei jeweils in eine Zahnstange (14) eingreifende Antriebsritzel (13) trägt.

15. Verschlussblendenvorrichtung nach einem der vorhergehenden Ansprüche, **dadurch gekennzeichnet, dass** der Anschlag in Bewegungsrichtung der Verschlussblende variabel einstellbar ist.

16. Verschlussblendenvorrichtung nach einem der vorhergehenden Ansprüche, **dadurch gekennzeichnet, dass** von dem Antrieb (6) bewegungsgekoppelt weiterhin ein Monitor (4) aus einer von der Verschlussblende (5) in der Verschlussposition abgedeckten Inaktivposition in eine in der Öffnungsposition der Verschlussblende (5) aus der Öffnung (3) herausragende Aktivposition bewegbar antreibbar ist.

## Claims

1. Closing screen device for covering an opening (3) in a component (2) of a motor vehicle so as to close said opening, having a drive mechanism (9) by means of which a closing screen (5) can be driven such that it can move from an opening position, which unblocks the opening, to a closed position which closes the opening and in which the closing screen is in a position flush with that edge region of the component of the motor vehicle which surrounds said closing screen, **characterized in that** a cover support (14) which extends in the movement direction (12) of the closing screen (5) can be driven by a reversible drive (6) such that it can move between the opening position and the closed position in the direction of its longitudinal extent, with that end region of the closing screen (5) which is at the front in the closing direction being mounted in an articulated manner on the cover support (14) such that it can pivot about a pivot axis (18) which extends transverse to the movement direction (12), said pivot axis being able to move freely along the extent of the cover support by an internal clearance (17), and with that end region of the closing screen (5) which is at the rear in the closing movement direction (22) being connected to the cover support (14) by means of a tilting lever (19) which, by way of one end, is mounted on the closing screen (5) and, by way of its other end, is mounted on the cover support (14) in an articulated manner such that it can pivot about axes (20, 21) which are parallel to the pivot axis (18), and is spring-loaded in relation to the cover support, having a stop by means of which the ability of the closing screen (5) to move in the closing movement direction (22) is limited before the closed position of the cover support is reached.

2. Closing screen device according to Claim 1, **characterized in that**, in its opening position, the closing screen (5) is entirely or partially beneath that edge region of the component of the motor vehicle which surrounds said closing screen.

3. Closing screen device according to either of the preceding claims, **characterized in that** the cover support can move along a linear movement path.

4. Closing screen device according to either of Claims 1 and 2, **characterized in that** the cover support can move along an arcuate movement path.

5. Closing screen device according to one of the preceding claims, **characterized in that** the cover support is guided such that it can move in a guide which is fixed to the vehicle.

6. Closing screen device according to claim 5, **characterized in that** the cover support is guided such that it can move in a guide groove (16).

7. Closing screen device according to one of the preceding claims, **characterized in that** the cover support is a toothed rack (14) in which a drive pinion (13) of the drive (6) engages.

8. Closing screen device according to Claim 7, **characterized in that** the drive pinion (13) can be driven such that it can be rotated by electric motor.

9. Closing screen device according to one of the preceding claims, **characterized in that** the internal clearance is formed by an elongate hole (17) which extends in the direction of extent of the cover support and into which a joint pin (18) projects, said joint pin extending coaxially to the pivot axis and being arranged at that
end of the closing screen (5) which is at the front in the closing movement direction (22).

10. Closing screen device according to Claim 9, **characterized in that** the joint pin is arranged on the closing screen by means of an eccentric and can be adjusted such that it can rotate about the eccentric axis.

11. Closing screen device according to one of the preceding claims, **characterized in that** the tilting lever (19) is spring-loaded in relation to the cover support by means of a prestressed torsion spring.

12. Closing screen device according to one of the preceding claims, **characterized in that** two identical cover supports are arranged parallel to and at a distance from one another.

13. Closing screen device according to Claim 12, **characterized in that** the two cover supports are firmly connected to one another by one or more crossmembers (15).

14. Closing screen device according to either of Claims 12 and 13, **characterized in that** a drive axle (11) which can be driven in rotation by the drive (6) is arranged such that it extends transverse to the movement direction (12) of the closing screen (5) and is fitted with two drive pinions (13) which each engage in a toothed rack (14).

15. Closing screen device according to one of the preceding claims, **characterized in that** the stop can be variably adjusted in the movement direction of the closing screen.

16. Closing screen device according to one of the preceding claims, **characterized in that** a monitor (4) can also be driven such that it can move from an inactive position, which is covered by the closing screen (5) in the closed position, to an active position, which projects out of the opening (3) in the opening position of the closing screen (5), in a movement-linked manner by the drive (6).

## Revendications

1. Dispositif obturateur destiné à recouvrir et obturer une ouverture (3) dans une pièce (2) d'un véhicule automobile, comportant un mécanisme d'entraînement (9) grâce auquel un panneau obturateur (5) peut être déplacé d'une position d'ouverture, dans laquelle l'ouverture est libérée, vers une position de fermeture, dans laquelle l'ouverture est obturée et dans laquelle le panneau obturateur se trouve en affleurement par rapport à la zone de bordure de la pièce du véhicule automobile qui l'entoure , **caractérisé par le fait qu**'un support de couvercle (14), qui s'étend dans le sens du déplacement (12) du panneau obturateur (5), peut être entrainé et déplacé par un mécanisme d'entrainement (6) réversible, dans le sens de sa longueur et entre la position d'ouverture et la position de fermeture, où la partie terminale du panneau obturateur (5), qui se trouve en avant dans le sens de la fermeture, est articulée, en étant pivotante sur le support de couvercle (14), autour d'un axe de pivotement (18) perpendiculaire à la direction du déplacement (12), lequel axe de pivotement peut se déplacer librement autour d'un oeillet ovale (17) dans le sens de la longueur du support de couvercle, et où la partie terminale du panneau obturateur (5), qui se trouve en arrière dans le sens de la fermeture, est liée, par l'intermédiaire d'un levier à bascule (19), au support de couvercle (14), lequel levier à bascule est articulé, en pivotant autour d'axes (20, 21) parallèles à l'axe de pivotement (18), par l'une de ses extrémités sur le panneau obturateur (5) et par son autre extrémité sur le support de couvercle (14) et est soumis par un ressort à une force de contrainte qui l'applique sur le support de couvercle, avec une butée par laquelle le déplacement du panneau obturateur (5) dans le sens de la fermeture (22) est limité avant que le support de couvercle atteigne la position de fermeture.

2. Dispositif obturateur selon la revendication 1, **caractérisé par le fait que,** dans sa position ouverte, le panneau obturateur (5) se trouve complètement ou partiellement sous la zone de bordure qui l'entoure de la pièce du véhicule automobile.

3. Dispositif obturateur selon l'une des revendications précédentes, **caractérisé par le fait que** le support de couvercle est mobile le long d'une piste de déplacement linéaire.

4. Dispositif obturateur selon l'une des revendications 1 et 2, **caractérisé par le fait que** le support de couvercle est mobile le long d'une piste de déplacement incurvée.

5. Dispositif obturateur selon l'une des revendications précédentes, **caractérisé par le fait que** le support de couvercle est mobile et est guidé dans un guide fixé dans le véhicule.

6. Dispositif obturateur selon la revendication 5, **caractérisé par le fait que** le support de couvercle est mobile et guidé dans une rainure de guidage (16).

7. Dispositif obturateur selon l'une des revendications précédentes, **caractérisé par le fait que** le support de couvercle est une crémaillère (14) dans laquelle est en prise un pignon d'entraînement (13) du mécanisme d'entrainement (6).

8. Dispositif obturateur selon la revendication 7, **caractérisé par le fait que** le pignon d'entraînement (13) est entraîné en rotation par un moteur électrique.

9. Dispositif obturateur selon l'une des revendications précédentes, **caractérisé par le fait que** l'oeillet ovale est formé par un trou oblong (17) dans le sens de la longueur du support de couvercle, dans lequel fait saillie un pivot d'articulation (18), lequel est coaxial avec l'axe de pivotement et lequel est monté à l'extrémité avant du panneau obturateur (5), dans le sens du mouvement de fermeture (22).

10. Dispositif obturateur selon la revendication 9, **caractérisé par le fait que** le pivot d'articulation est monté par l'intermédiaire d'un excentrique sur le panneau obturateur et qu'il est réglable par rotation autour de l'axe de l'excentrique.

11. Dispositif obturateur selon l'une des revendications précédentes, **caractérisé par le fait que** le levier à bascule (19) est soumis à une force de précontrainte vers le support de couvercle au moyen d'un ressort à torsion taré.

12. Dispositif obturateur selon l'une des revendications précédentes, **caractérisé par le fait que** deux supports de couvercle identiques sont disposés en parallèle l'un par rapport à l'autre à une certaine distance l'un de l'autre.

13. Dispositif obturateur selon la revendication 12, **caractérisé par le fait que** les deux supports de couvercle sont liés l'un à l'autre d'une façon fixe par une ou plusieurs traverses (15).

14. Dispositif obturateur selon l'une des revendications 12 et 13, **caractérisé par le fait qu**'un axe d'entraînement (11) commandé en rotation par le mécanisme d'entraînement (6) est placé perpendiculairement à la direction du déplacement (12) du panneau obturateur (5) et porte deux pignons d'entraînement (13) qui sont chacun en prise dans une crémaillère (14).

15. Dispositif obturateur selon l'une des revendications précédentes, **caractérisé par le fait que** la butée dans la direction du déplacement du panneau obturateur est réglable d'une façon variable.

16. Dispositif obturateur selon l'une des revendications précédentes, **caractérisé par le fait que,** en outre, un moniteur (4), qui est couplé au mécanisme d'entraînement (6), est mobile et entraîné à partir d'une position inactive recouverte, dans la position d'obturation, par le panneau obturateur (5) vers une position active faisant, dans la position ouverte du panneau obturateur (5), saillie hors de l'ouverture (3).
